# EUROPÄISCHE PATENTANMELDUNG

(11) **EP 4 113 054 A1**
(43) Veröffentlichungstag der Anmeldung: **04.01.2023**
(21) Anmeldenummer: 22182478.2
(22) Anmeldetag: 01.07.2022
(51) Int. Cl.: G01B 11/24, A61C 9/00

(54) **MESSVORRICHTUNG ZUR OPTISCHEN VERMESSUNG EINES OBJEKTS**

(30) Priorität: 02.07.2021 DE 102021117116
(71) Anmelder: Stiftung für Lasertechnologien in der Medizin und Messtechnik an der Universität Ulm Ilm, 89081 Ulm (DE)
(72) Erfinder: CLAUS, Daniel, 89257 Illertissen (DE); HIBST, Raimund, 89155 Erbach (DE)
(74) Vertreter: Konrad, Michael

(57) **Zusammenfassung**

Die Erfindung betrifft eine Messvorrichtung (1) zur optischen Vermessung eines Objekts (O) umfassend:
- eine Strahlungseinheit (2) ausgelegt zur Emission einer Vielzahl von räumlich getrennten, diskreten Mess-Strahlen (M),
- eine Strahlteilereinheit (3), welche dazu ausgelegt ist, einen ersten Teil der Mess-Strahlen (M) im Wesentlichen zu transmittieren und einen zweiten Teil der Mess-Strahlen (M) abzulenken,
- eine Fokussierungseinheit (4), ausgelegt zur gesteuerten, variablen Fokussierung der Mess-Strahlen (M),
- eine Detektoreinheit (6), ausgelegt zur selektiven Detektion der einzelnen reflektierten Mess-Strahlen (M),
wobei die Komponenten in der Messvorrichtung (1) so angeordnet sind, dass bei einer Messung die Strahlungseinheit (2) eine Mehrzahl von Mess-Strahlen (M) durch die Strahlteilereinheit (2) und die Fokussierungseinheit (4) auf ein vorbestimmtes Messvolumen (MV) emittiert, und die aus dem Messvolumen (MV) reflektierten Mess-Strahlen (M) durch die Strahlteilereinheit (3) zur Detektoreinheit (6) gelangen.

Die Erfindung betrifft des Weiteren ein Messverfahren und ein medizintechnisches Messgerät.

## Beschreibung

Die Erfindung betrifft eine Messvorrichtung und ein Messverfahren zur optischen Vermessung eines Objekts. Insbesondere betrifft die Erfindung eine Messvorrichtung und ein Messverfahren zur Erzeugung von drei-dimensionalen Kontourdaten eines Objekts, bevorzugt basierend auf einer Punktlichtquellen-Matrix z.B. einer VCSEL-Matrix.

Zur optischen Vermessung von Objekten existieren mannigfaltige Messverfahren und Messvorrichtungen, welche alle ihre Besonderheiten und spezielle Anwendungsgebiete haben. Dabei werden hier nicht einfache Distanzmessungen betrachtet, sondern Vermessungen der Form eines Objektes, also im Grunde vielfache Distanzmessungen zu einer Referenz oder Messungen zur Erlangung eines Absolutwerts.

Ein optimales Messgerät für eine bestimmte Anwendung sollte eine gute Messauflösung und eine zufriedenstellende Toleranz gegenüber Änderungen des Objekts aufweisen. Sowohl die Messauflösung als auch die notwendige Fehlertoleranz hängt von dem gewünschten minimalen Messfehler bei der Vermessung des Objekts ab.

Insbesondere im medizinischen Gebiet, aber auch bei der Vermessung anderer Objekte ist eine Fehlerquelle die Relativbewegung zwischen Objekt und Messgerät während des Messvorgangs, welche zu sogenannten Bewegungsartefakten in den Messungen führt. Diese Bewegungsartefakte können z.B. durch einen möglichst starren Messaufbau oder eine möglichst schnelle Messung reduziert werden.

Ein bekanntes Messgerät des Standes der Technik ist eine 3D-Kamera, mittels der eine dreidimensionale (3D) Szene aufgenommen und sogar mit Farben dargestellt werden kann. Eine solche Kamera ist z.B. unter dem Namen "Kinect" vielen Personen bekannt.

Ein Nachteil der Messgeräte des Standes der Technik ist, dass sie Bewegungsartefakte nicht ausreichend unterdrücken, um bei Messungen mit einer hohen geforderten Messgenauigkeit, insbesondere auf medizinischem Gebiet, zufriedenstellende Ergebnisse liefern zu können.

Aufgabe der vorliegenden Erfindung war es, die Nachteile des Standes der Technik zu überwinden und eine Messvorrichtung sowie ein Messverfahren zur Verfügung zu stellen, mittels derer eine sehr genaue Vermessung eines Objekts mit sehr geringen Bewegungsartefakten erreicht werden kann.

Diese Aufgabe wird durch eine Messvorrichtung sowie durch ein Messverfahren gemäß den Ansprüchen gelöst.

Eine erfindungsgemäße Messvorrichtung zur optischen Vermessung eines Objekts umfasst die folgenden Komponenten:
- Eine Strahlungseinheit ausgelegt zur Emission einer Vielzahl von (insbesondere polarisierten) räumlich getrennten, diskreten Mess-Strahlen,
- Eine Strahlteilereinheit, welche dazu ausgelegt ist, einen ersten Teil der Mess-Strahlen (z.B. mit einer ersten Polarisation polarisierte Strahlung) im Wesentlichen zu transmittieren und einen zweiten Teil der Mess-Strahlen (z.B. mit einer zweiten Polarisation polarisierte Strahlung) im Wesentlichen abzulenken,
- Eine Fokussierungseinheit, ausgelegt zur gesteuerten, variablen Fokussierung der Mess-Strahlen,
- Optional: Eine Polarisationseinheit ausgelegt zur Änderung der Polarisation der Mess-Strahlen,
- Eine Detektoreinheit, ausgelegt zur selektiven Detektion der einzelnen reflektierten Mess-Strahlen.

Die einzelnen Komponenten sind dabei in der Messvorrichtung so angeordnet, dass bei einer Messung die Strahlungseinheit eine Mehrzahl von Mess-Strahlen durch die Strahlteilereinheit und die die Fokussierungseinheit auf ein vorbestimmtes Messvolumen emittiert, und die aus dem Messvolumen reflektierten Mess-Strahlen durch die Strahlteilereinheit zur Detektoreinheit gelangen.

Die Mess-Strahlen können im Grunde beliebige Frequenzen bzw. Wellenlängen haben. Bevorzugt wird jedoch eine (elektromagnetische) Strahlung mit einer Wellenlänge kleiner als 25000 nm, insbesondere kleiner als 1200 nm und/oder größer als 200 nm, insbesondere größer als 400 nm, verwendet. Dabei ist Strahlung im sichtbaren Bereich und im Nahinfrarotbereich ("NIR": 780 nm bis 3000 nm) von der Strahlungsquelle bevorzugt. Strahlungsdetektoren in diesem Wellenlängenbereich sind vergleichsweise preisgünstig.

Die Strahlungseinheit ist zur Emission von einzelnen Mess-Strahlen ausgelegt. Dies bedeutet, dass eine Vielzahl von Strahlenbündeln (welche die Mess-Strahlen darstellen) so emittiert werden, dass sie räumlich trennbar sind, also von unterschiedlichen Orten und/oder in unterschiedliche Raumwinkel emittiert werden. Eine "Vielzahl" bedeutet in dieser Hinsicht mindestens vier, aber bevorzugt mehr als 10, besonders bevorzugt mehr als 100. Die Mess-Strahlen sind dabei bevorzugt in Form einer Matrix angeordnet, also mit einer vorbestimmten Regelmäßigkeit, wobei auch eine Linie von Mess-Strahlen hier als Matrix angesehen wird (z.B. als eine 1xN-Matrix). Eine Matrix aus Punktlichtquellen, insbesondere mit Oberflächenemittern bzw. VCSEL (von engl. "Vertical-Cavity Surface-Emitting Laser) stellt eine bevorzugte Lichtquelle für eine Strahlungseinheit dar, da sie robust, preisgünstig und energieeffizient ist und eine vorteilhafte Strahlung emittiert.

Die Strahlung der Strahlungseinheit sollte bevorzugt monochromatisch sein und einen geringen Divergenzwinkel besitzen. Es ist bevorzugt, dass ihre Strahlung eine Polarisation aufweist, insbesondere eine lineare Polarisation, z.B. eine s- oder p-Polarisation. Die Strahlungsquelle umfasst dazu bevorzugt eine Anzahl von Strahlungsquellen und bevorzugt eine Anzahl strahlformender und/oder -lenkender optischen Elemente und/oder polarisierender Elemente.

Geeignete Strahlteilereinheiten sind im Stand der Technik bekannt. Beispielsweise sind Polarisationsstrahlteiler dazu ausgelegt, Strahlung mit einer ersten Polarisation (z.B. p-polarisiertes Licht) zu transmittieren und Strahlung mit einer zweiten Polarisation (z.B. s-polarisiertes Licht) abzulenken. Da stets geringe Strahlungsverluste auftreten, wird bezüglich der Transmission oben "im Wesentlichen" gesagt. Dies bedeutet, dass bis auf unvermeidbare Verluste die gesamte Strahlung transmittiert wird bzw. abgelenkt wird. In absoluten Werten ist bevorzugt, dass "im Wesentlichen" mehr als 90% bedeutet, insbesondere mehr als 98%.

Die Strahlteilereinheit soll einen ersten Teil der Mess-Strahlen im Wesentlichen transmittieren und einen zweiten Teil der Mess-Strahlen im Wesentlichen ablenken. Mit "einem Teil" ist die Vielzahl einlaufender Mess-Strahlen gemeint oder es sind die im Messvolumen reflektierten Mess-Strahlen gemeint. Wichtig ist, dass einlaufende Mess-Strahlen und reflektierte Mess-Strahlen unterschiedlich durch die Strahlteilereinheit verlaufen. So können z.B. die von der Strahlungsquelle emittierten Mess-Strahlen durch die Strahlteilereinheit transmittiert werden und die im Messvolumen reflektierten Mess-Strahlen in der Strahlteilereinheit auf die Detektoreinheit abgelenkt werden. Es ist aber auch umgekehrt möglich, dass die von der Strahlungsquelle emittierten Mess-Strahlen in der Strahlteilereinheit abgelenkt werden und die im Messvolumen reflektierten Mess-Strahlen durch die Strahlteilereinheit auf die Detektoreinheit transmittiert werden.

Die Trennung von Strahlung ist generell mit einer Vielzahl unterschiedlicher Strahlteilerwürfel möglich. Jedoch ist eine Verwendung von Polarisationsstrahlteilern im Hinblick auf die Lichteffizienz und der Unterdrückung störende Reflexe, die meist mit der Verwendung herkömmlicher Strahlteilerwürfel einhergehen, vorteilhaft. Außerdem verlangt ein Großteil akusto-optischer Modulatoren (z.B. Quarz basierte) die Verwendung polarisierten Lichtes. Es gibt zwar Shear mode akustooptische Modulatoren (z.B. TeO₂), die auch bei depolarisiertem Licht funktionsfähig sind. Jedoch kann dabei die Beugungseffizienz zwischen s- und p-polarisiertem Licht um bis zu 10% schwanken. Auch bei einigen TAG Linsen kann polarisiertes Licht von Vorteil sein.

Die Fokussierungseinheit ist zur gesteuerten, variablen Fokussierung der Mess-Strahlen ausgelegt. Dies bedeutet, dass sie ein optisches Element umfasst, mittels dessen eine definierte Fokussierung eines Mess-Strahls erreicht wird und die Fokussierung dieses Mess-Strahls definiert geändert werden kann. Geeignete optische Elemente sind im Stand der Technik bekannt, z.B. TAG-Linsen (TAG (engl.): "Tunable Acoustic Gradient index of refraction), Computergenerierte Hologramme (CGH) oder Freiformlinsen. Zur Steuerung der Fokussierung kann die Fokussierungseinheit eine Steuereinheit umfassen (z.B. für eine TAG-Linse). Die Messvorrichtung kann aber auch eine Ablenkeinheit umfassen, welche die Mess-Strahlen so ablenkt, dass sie auf unterschiedliche Bereiche eines optischen Elements fallen (z.B. eines CGH oder einer Freiformlinse) und dadurch eine andere Fokussierung erreicht wird. Beispielsweise kann ein CGH so gestaltet sein, dass dessen Fokussierung von dem Einfallswinkel eines Strahls abhängig ist und ein Strahl durch eine Ablenkungseinheit mit unterschiedlichen Winkeln auf das CGH gelenkt wird. Eine Steuereinheit kann dann die Änderungseinheit steuern, wobei es auch möglich ist, dass die Strahlungseinheit bewegt wird.

Die Detektoreinheit muss die einzelnen eintreffenden Mess-Strahlen selektiv, d.h. einzeln bzw. räumlich getrennt, messen können. Im Sinne der Erfindung bedeutet selektiv insbesondere, dass die Intensität jedes einzelnen detektierten Mess-Strahls in mindestens einem dem jeweiligen Mess-Strahl zugeordneten (Punkt-)Sensor detektiert wird. Auch wenn es durchaus Überlappungen geben könnte (was jedoch nicht bevorzugt ist), existieren (Punkt-)Sensoren, die nur die Intensität eines einzelnen Mess-Strahls detektieren, so dass besonders bevorzugt jeder Mess-Strahl als einziger Mess-Strahl in einen individuellen Punktsensor trifft. Die Detektoreinheit kann dazu eine flächige Sensormatrix umfassen, bevorzugt ist jedoch auch ein Linien- bzw. Streifensensor (also eine Linie aus Punktsensoren), weil ein solcher schneller ausgelesen werden kann als eine flächige Sensormatrix.

Die Komponenten in der Messvorrichtung (also die einzelnen Einheiten) sind in der Messvorrichtung so angeordnet, dass (z.B. polarisierte) Mess-Strahlen von der Strahlungseinheit (z.B. mit einer ersten Polarisation) durch die Fokussierungseinheit auf ein vorbestimmtes Messvolumen emittiert werden und besonders bevorzugt zuvor durch die Strahlteilereinheit transmittiert wurden. Bei einer Messung befindet sich ein Objekt im Messvolumen. Generell kann man sagen, dass das Messvolumen durch denjenigen Raumbereich festgelegt wird, der durch die Mess-Strahlen beleuchtet wird, wobei die axiale Dimension des Messvolumens durch die Brennpunkte der Mess-Strahlen bei minimaler und maximaler Fokussierung definiert wird.

Zusammenfassend laufen Mess-Strahlen bei einer Messung von der Strahlungseinheit durch die Strahlteilereinheit und durch die Fokussierungseinheit, mit der sie variabel fokussiert werden, zum Messvolumen und werden bei einer Messung von einem Objekt dort reflektiert. Vor und/oder nach der Reflexion laufen sie durch die Polarisationseinheit und ihre Polarisation wird geändert (z.B. von einer ersten Polarisation in eine zweite Polarisation). Nun laufen die reflektierten Mess-Strahlen erneut durch die Strahlteilereinheit. Wenn sie zuvor transmittiert wurden, werden sie nun abgelenkt und umgekehrt. Wichtig ist dabei, dass die reflektierten Mess-Strahlen so verlaufen, dass sie in die Detektoreinheit einfallen und dort detektiert werden können (genauer: ihre Intensität wird gemessen).

Es sollte hier beachtet werden, dass zusätzlich zur axialen Abtastung (variablen Fokussierung) zusätzlich noch eine laterale Abtastung (transversale also seitliche Bewegung über das Objekt) erfolgen kann. Diese Möglichkeit wird weiter unten noch genauer beschrieben.

Ein erfindungsgemäßes Messverfahren zur optischen Vermessung eines Objekts mit einer erfindungsgemäßen Messvorrichtung umfasst die folgenden Schritte:
- Anordnung eines Objektes im Messvolumen der Messvorrichtung oder Positionierung der Messvorrichtung, so dass sich ein zu vermessendes Objekt im Messvolumen befindet,
- Emission einer Vielzahl von Mess-Strahlen aus der Strahlungseinheit,
- Einstellung der Fokussierungseinheit und Fokussierung der Mess-Strahlen auf jeweils einen ersten individuellen Brennpunkt und Detektion der am Objekt reflektierten Mess-Strahlen von der Detektoreinheit,
- Verstellung der Brennweite der Fokussierungseinheit innerhalb eines vorbestimmten Bereichs,
- optional: Verstellung einer lateralen Strahlablenkung der Fokussierungseinheit innerhalb eines vorbestimmten Bereichs, und Verstellung der Brennweite der Fokussierungseinheit innerhalb eines vorbestimmten Bereichs für diskrete Werte der axialen Abtastung des Objekts,
- Detektion der Intensität der am Objekt reflektierten Mess-Strahlen mittels der Detektoreinheit zumindest über den Zeitraum der Verstellung der Fokussierungseinheit, und Generierung von Vermessungsdaten basierend auf den detektierten Intensitäten,
- optional: Wiederholung der Messung mit einer anderen relativen Positionierung von Messvorrichtung und Objekt.

Das Objekt kann in einer Halterung der Messvorrichtung angeordnet werden oder die Messvorrichtung einfach vor das Objekt gehalten werden. Beispielsweise könnte eine Messvorrichtung bei einer Aufnahme der Zähne oder des Rachenraumes einfach in den Mund eines Patienten eingebracht und auf den zu untersuchenden Bereich ausgerichtet werden.

Durch Anschalten der Energieversorgung der Messvorrichtung wird dann automatisch eine Vielzahl von Mess-Strahlen aus der Strahlungseinheit emittiert. Die Energie wird bevorzugt auch zur Versorgung der Detektoreinheit und damit zur Datennahme verwendet. Es ist bevorzugt, dass mit dem Anschalten der Strahlungseinheit gleichzeitig die Datennahme gestartet wird.

Im Zuge der Einstellung der Fokussierungseinheit kann eine bereits vorliegende Einstellung verwendet werden. Wie oben angesprochen wurde, gibt es mehrere Möglichkeiten einer gesteuerten Änderung der Brennweite. Beispielsweise kann die Fokussierungseinheit verändert werden oder der Auftreffpunkt der Mess-Strahlen auf der Fokussierungseinheit. Eine Einstellung der Fokussierungseinheit bedeutet im ersten Fall, dass die Fokussierungseinheit auf eine Brennweite eingestellt wird (z.B. die bereits vorliegende) und im zweiten Fall, dass die Mess-Strahlen in einer bestimmten Position auf die Fokussierungseinheit auftreffen (z.B. die bereits vorliegende). Eine Fokussierung der Mess-Strahlen erfolgt dann automatisch durch die Fokussierungseinheit.

Wohlgemerkt wird jeder Mess-Strahl auf einen individuellen Brennpunkt fokussiert. Es ist besonders bevorzugt, dass jeder Mess-Strahl auf einen anderen Bereich des Objekts fällt. Bei einer beispielhaften regelmäßigen, matrixförmigen Anordnung der Mess-Strahlen wäre ein Objekt von einem regelmäßigen Muster von (je nach Abstand und Form des Objekts fokussierten) Lichtpunkten überzogen.

Eine Verstellung der Brennweite der Fokussierungseinheit kann wie vorangehend beschrieben erfolgen, z.B. durch Änderung der Brennweite der Fokussierungseinheit oder durch Änderung des Auftreffpunktes der Mess-Strahlen auf der Fokussierungseinheit. Die Verstellung erfolgt dabei innerhalb eines vorbestimmten (Werte)Bereichs für die Brennweite. In dem vorangehend genannten Beispiel kann man sich dies bildlich so vorstellen, dass das regelmäßige Muster von Lichtpunkten näher oder weiter von der Fokussierungseinheit entfernt fokussiert ist. Bevorzugt erfolgt die Veränderung der Fokussierung kontinuierlich, so dass der Brennpunkt auf einem Weg entlang der optischen Achse der Vorrichtung verfahren (bzw. durchgestimmt) wird. Man kann sich dies so vorstellen, dass jeder Mess-Strahl an einer bestimmten Stelle im Messvolumen fokussiert wird und der fokussierte Punkt über einen bestimmten Abstand zur Fokussierungseinheit hinweg scannt. Eine Reflexion wird am hellsten sein, wenn ein fokussierter Lichtpunkt auf die Oberfläche des Objekts trifft.

Man kann also mit der Kenntnis der jeweils vorliegenden Brennweite durch die Intensität der reflektierten Mess-Strahlen Informationen über die Form des Objekts erlangen; dies jedoch nur an den diskreten Orten, an denen die Mess-Strahlen auf das Objekt treffen.

Optional können diese Auftreffpunkte durch eine Verstellung einer lateralen Strahlablenkung der Fokussierungseinheit verändert werden und damit mehr Informationen über die Form des Objekts gesammelt werden. Diese Verstellung erfolgt innerhalb eines vorbestimmten Bereichs, der bevorzugt den Abständen zu benachbarten Messpunkten entspricht. Beispielsweise können die Mess-Strahlen längs mindestens einer (geraden oder gekrümmten) Linie orthogonal zur optischen Achse der Messvorrichtung verstellt werden. Besonders bevorzugt sind mäander- oder spiralförmige Linienmuster der Verstellung, da auf diese Weise eine Fläche effektiv abgefahren werden kann.

Es ist dabei wichtig, dass für diskrete Werte der lateralen Strahlablenkung wieder eine Verstellung der Brennweite der Fokussierungseinheit erfolgt, da ja für eine dreidimensionale Vermessung des Objekts eine Tiefeninformation vorhanden sein soll.

Es ist bevorzugt, dass ein lateraler Versatz der Mess-Strahlen bei einem oder durch einen größeren Winkelversatz an der Fokussierungseinheit fokussierten Mess-Strahlen erfolgt. Beispielsweise kann ab einem bestimmten Einfallswinkel von an einem akusto-optischen Modulator gebeugten Licht ein lateraler Versatz des Punktemusters bei Verwendung einer Freiformoptik oder eines CGH hervorgerufen werden.

Aus einer lateralen Abtastung kann sich eine vorteilhafte, nahezu lückenlose Abtastung eines Messkörpers (Objekts) ergeben.

Die reflektierten Mess-Strahlen werden nun mit der Detektoreinheit detektiert, bzw. deren Intensität. Dies erfolgt zumindest über den Zeitraum der Verstellung der Fokussierungseinheit, also so lange wie der Scanvorgang dauert. Dies kann durchaus sehr schnell erfolgen, wenn man bedenkt, dass eine handelsübliche TAG-Linse einen vorbestimmten Brennweitenbereich mit ca. 70 kHz durchfahren kann. Verwendet man in der Detektoreinheit einen Liniendetektor mit 512 Pixeln und einer Ausleserate von 10 MHz, so können 142 Tiefenpunkte von 512 Mess-Strahlen im Mikrosekundenbereich aufgenommen werden.

Aus den detektierten Mess-Strahlen werden nun Vermessungsdaten generiert. Diese können einfach die gemessenen Intensitäten zusammen mit den aktuellen Werten (Koordinaten) zur Fokussierung und ggf. zur lateralen Ablenkung umfassen. Im Grunde sollten die Vermessungsdaten die Koordinaten des Brennpunktes eines jeden Mess-Strahls zusammen mit der gemessenen Intensität an diesem Punkt umfassen.

Diese Messung wird danach bevorzugt mit einer anderen relativen Positionierung von Messvorrichtung und Objekt wiederholt. Beispielsweise kann die Messvorrichtung etwas bewegt und erneut gemessen werden. Die Messergebnisse können mittels bekannter Bildverarbeitungsverfahren (die nicht Teil dieser Erfindung sind) miteinander kombiniert werden.

Ein erfindungsgemäßes medizintechnisches Messgerät ist insbesondere ein Interoralscanner oder ein Endoskop und umfasst eine erfindungsgemäße Messvorrichtung und ist bevorzugt zur Durchführung eines erfindungsgemäßen Messverfahrens ausgelegt.

Im Folgenden werden weitere bevorzugte Ausführungsformen der Erfindung beschrieben. Es wird darauf hingewiesen, dass ein bevorzugtes Interferometer-System auch analog zu der entsprechenden Beschreibung des Messverfahrens ausgestaltet sein kann und umgekehrt und dass insbesondere auch einzelne Merkmale verschiedener Ausführungsbeispiele miteinander kombiniert werden können.

Bevorzugt sind die Mess-Strahlen der Strahlungseinheit regelmäßig angeordnet, bevorzugt in einer NxM-Matrix mit N Zeilen und M Spalten. Dies bedeutet, dass mehrere räumlich getrennte Mess-Strahlen emittiert werden. Die Mess-Strahlen sind dabei in Form einer Matrix angeordnet, also mit einer vorbestimmten Regelmäßigkeit, wobei auch eine Linie von Mess-Strahlen hier als Matrix angesehen wird (z.B. als eine 1xN-Matrix). Bevorzugt liegt die Anzahl der Lichtquellen zwischen 10 und 10.000, insbesondere ist die Anzahl größer als 100.

Es ist von Vorteil, wenn die Strahlung monochromatisch ist, da in diesem Fall die Optik keine chromatischen Aberrationen aufweist und somit einfacher optimiert werden kann und sogar diffraktive Optiken eingesetzt werden können. Des Weiteren ist bevorzugt, dass die Strahlung einen geringen Divergenzwinkel aufweist, damit die Strahlenbündel nicht überlappen und gut voneinander trennbar sind.

Bei einer bevorzugten Messvorrichtung umfasst die Strahlungseinheit eine Matrix aus Punktlichtquellen ("Emittermatrix"), bevorzugt VCSEL. Ein solches VCSEL-Punktlichtquellenarray zeichnet sich dadurch aus, dass die Strahlung der Einzelemitter monochromatisch ist, einen geringen Divergenzwinkel besitzt und zuweilen bereits linear polarisiert ist. Zudem sind bei einem Laser-Array störende Interferenzartefakte (z.B. basierend auf dem Talbot-Effekt) minimiert und es kann auch eine bessere Kühlung erreicht werden. Zudem liefern Laser oftmals bereits linear polarisierte Strahlung. Alternativ zu einer Lasermatrix kann auch eine einfache LED-Matrix verwendet werden, insbesondere für Anwendungen, bei denen ein niedriger Preis eine höhere Priorität hat als eine maximale Messgenauigkeit. In diesem Fall kann auch eine kollimierte, ausgedehnte Einzellichtquelle mit einer Mikrolinsen-Matrix verwendet werden, wobei ein solcher Aufbau in der Regel den Nachteil hat, dass die Intensität zum Rand hin abfällt und der Talbot-Effekt auftritt. Es sollte stets darauf geachtet werden, dass die Messgenauigkeit möglichst so gewählt wird, dass sie optimal zur jeweiligen Anwendung passt.

Die Strahlungseinheit umfasst bevorzugt ein optisches Element zur Formung der Mess-Strahlen, z.B. eine Makrolinse oder eine (Mikro-)Linsenmatrix. Dabei ist je nach Anwendung bevorzugt, dass parallele Bündel von Mess-Strahlen emittiert werden (mit parallelen Strahlachsen) oder Mess-Strahlen mit zueinander geneigten Strahlachsen, wobei sich die Mess-Strahlen dann bevorzugt in einem Bereich zwischen Strahlungseinheit und Messvolumen überschneiden, insbesondere in der Strahlteilereinheit. Bei der Verwendung einer Emittermatrix kann eine Linsenmatrix mit einer Linse pro Strahlungsquelle zur Formung der Mess-Strahlen bevorzugt sein. Der Verlauf der Mess-Strahlen hängt stark von der verwendeten Fokussierungseinheit ab. Wird z.B. eine TAG-Linse verwendet, sind zueinander geneigte Mess-Strahlen bevorzugt, bei der Verwendung von CGH oder Freiformoptiken können auch parallele Strahlverläufe bevorzugt sein. Eine Kollimation sollte mit vernachlässigbar geringer Aberration erfolgen. Es sind refraktive und oder diffraktive Optiken bevorzugt, aber auch eine Hybridoptik (refraktiv und diffraktiv).

Die Strahlungseinheit umfasst bevorzugt ein Polariationselement, insbesondere eine λ/2-Platte, zur Einstellung der Polarisationsrichtung der bereits linear polarisiert einfallenden Strahlung der Punktlichtquellen. Die Polarisationsrichtung und Polarisationsart hängt von dem Polarisationselement und dem gewünschten Strahlverlauf ab.

Bevorzugt umfasst die Fokussierungseinheit eine TAG-Linse zusammen mit einer Steuerungseinheit. Alternativ oder zusätzlich umfasst eine bevorzugte Fokussierungseinheit ein computergeneriertes Hologramm und/oder eine Freiformlinse in Kombination mit einem Strahldeflektor, welche(s) zur variablen Fokussierung von Lichtstahlen ausgelegt ist. Die Fokussierungseinheit dient als Element zur schellen Verschiebung der Fokuslage der Mess-Strahlen im Messvolumen. Die Veränderung der Brennweite sollte mit einer Frequenz größer als 1 kHz insbesondere größer als 10 kHz erfolgen, um Bewegungsartefakte zu minimieren. Bevorzugt ist eine elektro-optische und/oder akusto-optische Modulation der Fokussierungseinheit oder der Strahlrichtung der Mess-Strahlen (auch als elektro-optisch oder akusto-optische Deflektoren bekannt). Bei einer bevorzugte Ausführungsform ist die Fokussierungseinheit dazu so ausgestaltet, dass bei dem Passieren einer bestimmten Fokusebene ein lateraler Shift erzeugt wird, d.h. die Foki springen lateral, wenn diese bestimmte Fokusebene passiert wird.

Bei einer konkreten praktischen Umsetzung umfasst die Fokussierungseinheit bevorzugt eine erste Freiformlinse gefolgt von einer ersten Fokussierungsoptik, einer Einheit, insbesondere einem akusto-optischen Modulator, zur Winkeländerung der Mess-Strahlen, gefolgt von einer zweiten Fokussierungsoptik und einer zweiten Freiformlinse. Bei einer alternativen konkreten praktischen Umsetzung umfasst die Fokussierungseinheit bevorzugt eine Einheit, insbesondere einen akusto-optischen oder elektro-optischen Modulator, zur Positions- und/oder Winkeländerung der Mess-Strahlen gefolgt von einem computergenerierten Hologramm (CGH) oder einer Freiformlinse. Ein CGH oder eine Freiformlinse kann so gestaltet sein, dass Strahlen, die unter verschiedenen Einfallswinkeln auf das Element bzw. auf unterschiedliche Positionen des Elements fallen, unterschiedliche Brennweiten zugeordnet werden. Eine Strahlbewegung kann also die Mess-Strahlen gezielt unter bestimmten Winkeln oder auf bestimmte Orte des CGH lenken (z.B. periodisch mit 10 kHz) und damit eine schnelle Änderung der Brennweite bewirken.

Im Hinblick auf den akusto-optischen Modulator sei angemerkt, dass in dem Fall, dass das entsprechende Element den Strahl ablenkt, dieser oft auch als "akusto-optischer Deflektor" bezeichnet wird. Daher ist hier mit der Bezeichnung " akusto-optischer Modulator" auch ein akusto-optischer Deflektor umfasst.

Bevorzugte Konfigurationen sind:
- TAG-Linse
- Akusto-optischer Modulator + Konvexlinse + Freiformoptik
- Akusto-optischer Modulator + Konvexlinse + (Volumen-)Hologramm
- Akusto-optischer Modulator + (Volumen-)Hologramm

Die Fokussierungseinheit ermöglicht also die Variation der Brennweite der Messvorrichtung, so dass im Messvolumen ein Punktemuster in unterschiedlichen Tiefen abgebildet wird. Mit einem akusto-optischen Modulator und einem CGH oder Freiformoptik ist eine kleinere Abmessung der Messvorrichtung möglich, wodurch beispielsweise Intraoralscanner vorteilhaft realisiert werden können.

Es sollte beachtet werden, dass die Änderung der Brennweite durchaus kontinuierlich erfolgen kann. Eine digitale Arbeitsweise der Detektoreinheit kann daraus diskrete Messwerte bei bestimmten Brennweiten machen, wie oben bereits angedeutet wurde. Wird z.B. eine Detektoreinheit mit einer Ausleserate von 10 MHz betrieben und die Brennweite von Mess-Strahlen mit 10 kHz kontinuierlich geändert, können 1000 Messpunkte bei diskreten Brennweiten pro Brennweitenscan aufgenommen werden.

Bevorzugt ist die Polarisation der von der Strahlungseinheit emittierten Mess-Strahlen eine lineare Polarisation. Die Polarisationseinheit ist dann bevorzugt so ausgestaltet und angeordnet, dass sie die Polarisation der Mess-Strahlen in eine andere Raumachse dreht, wobei die Polarisationseinheit bevorzugt eine λ/4-Platte ist, die insbesondere um 45° zur Richtung der Polarisation der Mess-Strahlen gedreht ist. Nach Durchtritt von linear p-polarisierten Mess-Strahlen durch die gedrehte λ/4-Platte wird zirkular polarisiertes Licht erzeugt. Das am Objekt reflektierte und gestreute Licht durchläuft dann wieder die gesamten optischen Elemente bis hin zur λ/4-Platte. Dort wird das durch die Reflexion in der zirkularen Polarisationsrichtung gedrehte Licht beim erneuten Durchlauf durch die λ/4-Platte s-polarisiert, sodass es am Polarisationstrahlteiler reflektiert wird.

Bevorzugt ist die Fokussierungseinheit dazu ausgelegt, die Mess-Strahlen lateral zur Strahlrichtung zu bewegen, insbesondere auf mäanderförmigen oder spiralförmigen Bahnen. Damit kann die Oberfläche eines Objekts abgescannt werden. Dazu kann die Messvorrichtung ein zusätzliches Element zum schellen Lateralscan umfassen. Es kann jedoch auch die Fokussierungseinheit speziell ausgestaltet sein, so dass ein sowieso zur variablen Fokussierung verwendeter bewegter Mess-Strahl auch lateral abgelenkt werden kann. Beispielsweise kann ein CGH dazu ausgelegt sein, die Brennweite eines bewegten Mess-Strahls gleichzeitig mit einer lateralen Bewegung im Messvolumen zu verändern. Eine laterale Veränderung sollte mit einer Frequenz größer als 0,1 kHz erfolgen.

Bei einer Bewegung der auf der Fokussierungseinheit von der Strahlungseinheit eintreffenden Mess-Strahlen über einen bestimmten Bereich X (Winkelbereich oder Position) kann ein CGH so gestaltet sein, dass zunächst kleine Werte (z.B. jeweils 10% von X) eine Änderung des Brennpunkts der Mess-Strahlen vornehmen und wenn die Bewegung darüber hinausgeht (z.B. wieder 10% von X also 10% bis 20%) ein Brennweitenscan bei einer lateralen Verschiebung erfolgt. So können also bei einer Durchstimmung über 100% von X zehn Brennweitenscans bei zehn lateralen Positionen vorgenommen werden.

Ein lateraler Scan sollte nur in einem Bereich erfolgen, den kein anderer Mess-Strahl abdecken kann. Liegen Mess-Strahlen z.B. 1 mm lateral auseinander, müsste nur ein Bereich von 1 mm x 1 mm von einem Mess-Strahl abgescannt werden, da benachbarte Bereiche von benachbarten Mess-Strahlen abgescannt werden können.

Hierzu ist zu beachten, dass mit einer lateralen Verschiebung der Mess-Strahlen im Messvolumen erneut ein Brennweitenscan erfolgen sollte, damit auch dort Tiefenpunkte erhalten werden können. Beides kann kontinuierlich erfolgen. Ist die Geschwindigkeit der lateralen Abtastung bekannt und auch die Geschwindigkeit der Durchstimmung der Brennweiten, so können bei bekannter Aufnahmerate der Detektoreinheit genau die Positionen der jeweils aufgenommenen Punkte im Messvolumen berechnet werden. Oder kurz: Wird eine diskrete laterale Veränderung durchgeführt (Mess-Strahlen lateral verschoben, angehalten und dann Brennweitenscan durchgeführt), so liegen die Punkte auf einer Linie parallel zur Strahlachse. Wird eine kontinuierliche laterale Veränderung durchgeführt (Mess-Strahlen lateral (langsam) verschoben und währenddessen (schnell) Brennweitenscans durchgeführt), so liegen die Punkte auf einer Linie schräg zur Strahlachse, da sich ja die Strahlen während des Brennweitenscans weiter bewegen. Eine digitale Arbeitsweise der Detektoreinheit kann daraus diskrete Messwerte bei bestimmten Brennweiten machen (s. vorangehendes Beispiel). Wird z.B. eine Detektoreinheit mit einer Ausleserate von 10 MHz betrieben, ein lateraler Scan mit 1 kHz durchgeführt und die Brennweite von Mess-Strahlen mit 10 kHz kontinuierlich geändert, kann bei einer Tiefenauflösung von 1000 Messpunkten pro Millisekunde ein Wert für den lateralen Scan aufgenommen werden. In 100 Millisekunden könnte also bei einem Abstand von 1 mm zwischen benachbarten Mess-Strahlen eine laterale Auflösung von 0,1 mm bei einer Aufnahmedauer von 100 ms erreicht werden.

Bevorzugt wird also bei vorbestimmten lateralen Ablenkungen eine variable Fokussierung der Mess-Strahlen über einen vorbestimmten Bereich der Fokussierung vorgenommen.

Eine bevorzugte Messvorrichtung ist dadurch gekennzeichnet, dass
- die Strahlungseinheit zur Emission von polarisierten Mess-Strahlen ausgelegt ist,
- die Strahlteilereinheit dazu ausgelegt ist, Strahlung mit einer ersten Polarisation im Wesentlichen zu transmittieren und Strahlung mit einer zweiten Polarisation, welche sich von der ersten Polarisation unterscheidet, abzulenken, wobei die Strahlteilereinheit bevorzugt einen Polarisationsstrahlteiler umfasst,
- die Messvorrichtung eine Polarisationseinheit umfasst, ausgelegt zur Änderung der Polarisation der Mess-Strahlen,
- wobei die Komponenten in der Messvorrichtung so angeordnet sind, dass bei einer Messung die Strahlungseinheit eine Mehrzahl von polarisierten Mess-Strahlen durch die Strahlteilereinheit und die Fokussierungseinheit auf ein vorbestimmtes Messvolumen emittiert, die Polarisation der Mess-Strahlen durch die Polarisationseinheit in eine andere Polarisation geändert wird, so dass aus dem Messvolumen reflektierte Mess-Strahlen durch die Strahlteilereinheit zur Detektoreinheit gelangen.

Die von der Strahlungseinheit emittierte Strahlung kann je nach Aufbau und gewünschtem Strahlverlauf die erste Polarisation aufweisen und von der Strahlteilereinheit transmittiert werden, wobei reflektierte Mess-Strahlung dann die zweite Polarisation aufweisen (und im Strahlteiler abgelenkt werden) sollte. Die von der Strahlungseinheit emittierte Strahlung kann aber auch die zweite Polarisation aufweisen und von der Strahlteilereinheit auf das Objekt abgelenkt werden, wobei reflektierte Mess-Strahlung dann die erste Polarisation aufweisen und transmittiert werden sollte. Die von der Strahlungseinheit emittierte Strahlung weist also bevorzugt entweder die erste Polarisation oder die zweite Polarisation auf.

Die Polarisationseinheit sorgt dafür, dass ein Mess-Strahl, der von dem Messvolumen in Richtung des Strahlteilers reflektiert wird, eine Änderung der Polarisation erfährt, z.B. von einer ersten Polarisation hin zu der zweiten Polarisation. Dies kann z.B. mittels einer λ/4-Platte erreicht werden, welches um 45° zur einfallenden Polarisationsrichtung (erste Polarisation) gedreht ist. Dadurch wird aus einem einlaufenden p-polarisierten Mess-Strahl nach dem Durchtritt ein zirkular polarisierter Strahl erzeugt. Der am Objekt reflektierte Mess-Strahl durchläuft dann wieder die λ/4-Platte, wodurch der reflektierte, zirkular polarisierte Mess-Strahl s-polarisiert wird. In diesem Falle würde der p-polarisierte Mess-Strahl durch die Strahlteilereinheit transmittiert und der s-polarisierte Mess-Strahl von der Strahlteilereinheit abgelenkt (z.B. reflektiert) oder umgekehrt.

Durch die Polarisationseinheit wird die Polarisation der reflektierten Mess-Strahlen also in eine andere (z.B. die zweite) Polarisation geändert, so dass sie nun bei ihrem weiteren Weg durch die Strahlteilereinheit abgelenkt oder durch diese transmittiert werden. Die Detektoreinheit ist so angeordnet, dass die reflektierten Mess-Strahlen durch die Strahlteilereinheit auf einen Sensor in der Detektoreinheit treffen und dort detektiert werden können.

Eine bevorzugte Strahlteilereinheit umfasst somit einen Polarisationsstrahlteiler, z.B. einen Strahlteilerwürfel, der polarisationssensitiv ist, insbesondere so dass p-polarisiertes Laserlicht transmittiert und Verluste sowie Störungen durch Reflexionen vernachlässigbar gering sind. Die Komponenten der Messvorrichtung (insbesondere Strahlungseinheit, Strahlteilereinheit und Fokussierungseinheit) sind dabei bevorzugt für einen konfokalen Verlauf von Mess-Strahlen und reflektierten Mess-Strahlen ausgelegt. Die Strahlteilereinheit dient der Trennung von Beleuchtungs- und Detektionsstrahlengang. Eine Strahlteilung über Polarisation ist bevorzugt, da dadurch eine bessere Lichtausbeute und eine Verminderung störender Reflexe erreicht werden kann. Eine bevorzugte Strahlteilereinheit umfasst eine Strahlteilerplatte, einen Pellicle Strahlteiler oder einen Strahlteilerwürfel. Bevorzugt ist eine Antireflexbeschichtung für die Wellenlänge der Lichtquelle.

Bevorzugt umfasst die Detektoreinheit mindestens einen Liniendetektor (auch als Zeilen- oder Streifendetektor bezeichnet) und eine Linearisierungseinheit, die dazu ausgestaltet ist, ein zweidimensionales Lichtmuster auf den Liniendetektor abzubilden. Eine solche Linearisierungseinheit ist bevorzugt ein (mikrooptischer) image slicer oder eine Anordnung von Lichtleitern oder eine Transformationsoptik. Die reflektierten Lichtstrahlen werden also durch eine optische Anordnung (z.B. Lichtleiter bzw. optical slicer) so "umsortiert", dass das 2D- Messpunktemuster entlang einer geraden Linie angeordnet ist und mit dem Liniensensor aufgezeichnet werden kann. Dies kann insbesondere durch eine Kombination aus Makrolinse/Linsenarray, Umlenkprisma und Mikrolinsen mit dazugehörigen single-mode Fasern realisiert werden. Das Umlenkprisma, die Mikrolinsen und die single-mode Fasern können bevorzugt direkt mittels Zwei-Photonen-Polymerisation (2PP) als Muster gefertigt und für die Vervielfältigung abgeformt werden. Das andere Ende der Faser befindet sich auf einem Zeilensensor, sodass jedem im 2D-Punkteraster angeordneten Messpunkt über das mikrooptische Fasersystem ein Detektorpixel zugeordnet werden kann. Die detektionsseitig abgebildete 2D-Messpunkteanordnung ist vorzugsweise zur Detektor-Zeile so verkippt, dass die 2PP-gefertigten oder abgeformten Fasern auf geraden Bahnen hin zum jeweiligen Detektorpixel verlaufen. Bei der Verwendung eines Punktlichtquellenarrays und einer 2D-Faseranordung im Detektionsarm ist das konfokale Messprinzip gewährleistet, sodass der Einfluss von defokussiertem Licht bei der Detektion stark unterdrückt wird. Eine Konfokal-Bedingung kann also durch einen gedruckten oder abgeformten Lichtleiter erfüllt werden, mit einer leicht verkippten Anordnung vom Sensor zur Zwischenabbildung der Messpunkte, sodass gerade Lichtleiter verwendet werden können. Ein sortierendes Faserbündel erfüllt diesen Zweck ebenfalls vorteilhaft.

Es kann bevorzugt auch eine 2D-Detektormatrix verwendet und auf eine Linearisierungsoptik verzichtet werden, ein Liniendetektor erlaubt jedoch eine schnellere Auslese der Detektionselemente, was eine höhere Tiefenauflösung bei gleichbleibender Messzeit erlaubt. Ist die Länge der Messzeit unkritisch, können durchaus auch flächige Detektoren verwendet werden, z.B. eine Kamera. Bei einer gewünschten Tiefenauflösung TA bei einer Frequenz der Brennweitenscans von F sollte die Ausleserate der Detektoreinheit größer oder gleich F·TA sein. Die Ausleserate der Detektoreinheit ist bevorzugt mindestens 10-fach größer als die Frequenz, mit die Fokuslage verschoben wird. Bevorzugt beträgt die Ausleserate der Detektoreinheit mehr als 10 kHz, bevorzugt mehr als 1 MHz.

Die Anzahl der Sensorelemente sollte gleich oder größer der Anzahl der Mess-Strahlen sein. Es ist aber nicht unbedingt notwendig, dass die Anzahl der Sensorelemente viel größer als die Anzahl der Mess-Strahlen ist. Optimal wäre es, wenn ein Mess-Strahl von einem Pixel der Detektoreinheit aufgenommen würde.

Bevorzugt umfasst die Detektoreinheit zur Ausblendung unerwünschter Strahlung eine Lochblendenmatrix, bevorzugt eine Kombination aus Fokussierungsoptik bzw. Lichtleiter und/oder Lochblendenmatrix.

Eine bevorzugte Messvorrichtung umfasst eine Farbbildkamera zur Aufnahme von zweidimensionalen Farbbildern des Objekts und insbesondere eine Weißlichtquelle zur Beleuchtung des Objekts mit weißem Licht für die Farbbildkamera. Die Messvorrichtung umfasst bevorzugt zusätzlich eine Bildbearbeitungseinheit, die dazu ausgestaltet ist, den Vermessungsdaten des Objekts Farbinformationen der aufgenommenen Farbbilder zuzuordnen.

Beispiele für bevorzugte Ausführungsformen der erfindungsgemäßen Vorrichtung sind in den Abbildungen schematisch dargestellt.
Figur 1 zeigt eine Emittermatrix für eine bevorzugte Messvorrichtung.
Figur 2 zeigt eine bevorzugte Ausführungsform einer Messvorrichtung.
Figur 3 zeigt ein Blockschaltbild einer bevorzugten Ausführungsform des Messverfahrens.
Figur 4 zeigt eine bevorzugte Detektoreinheit.
Figur 5 zeigt eine weitere bevorzugte Detektoreinheit.
Figur 6 zeigt eine alternative Fokussierungseinheit.
Figur 7 zeigt eine weitere bevorzugte Ausführungsform einer Messvorrichtung mit einer weiteren bevorzugten Fokussierungseinheit.

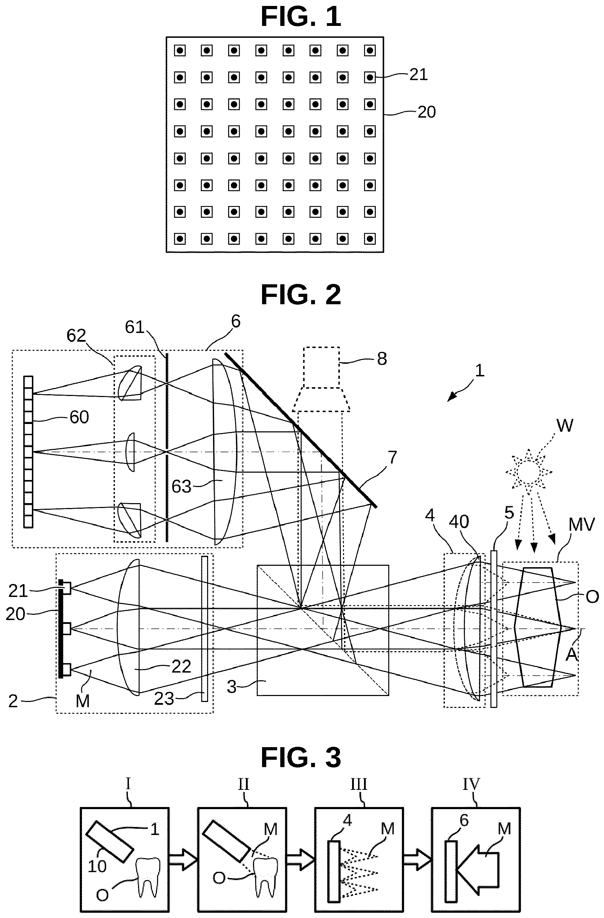

Figur 1 zeigt eine Emittermatrix 20 für eine bevorzugte Messvorrichtung 1 von vorne, also der Seite, welche die Mess-Strahlen M emittiert (s. auch Figur 2). Diese Emittermatrix 20 ist hier beispielsweise eine Matrix aus 64 VCSEL Dioden, die als Punktlichtquellen 21 dienen. In den folgenden Figuren ist eine solche Emittermatrix 20 stets im Profil vereinfacht mit drei Punktlichtquellen 21 skizziert.

Figur 2 zeigt eine bevorzugte Ausführungsform einer Messvorrichtung 1. Ein Punktlichtquellenarray als Emittermatrix 20 emittiert Mess-Strahlen M, welche sich dadurch auszeichnen, dass sie monochromatisch sind, einen geringen Divergenzwinkel aufweisen und vorzugsweise linear polarisiert sind. In diesem Beispiel kann angenommen werden, dass die Mess-Strahlen M Licht im weitesten Sinne verkörpern, also Licht aus dem sichtbaren Bereich und dem (insbesondere nahen) Infrarotbereich sein können.

Die divergenten Mess-Strahlen M werden durch eine Makrolinse 22 kollimiert, sodass diejenigen Mess-Strahlen M, deren Ursprungspunkt nicht auf der optischen Achse liegt, unter einem Winkel zur optischen Achse aus der Strahlungseinheit 2 austreten. Die Strahlungseinheit umfasst hier noch eine λ/2-Platte 23 als Polarisierungselement, die dafür sorgt, dass die Mess-Strahlen M in einer ersten Polarisation linear p-polarisiert sind.

Die aus der Strahlungseinheit 2 austretenden Mess-Strahlen M treffen auf die nachfolgende Strahlteilereinheit 3, die hier durch einen Polarisationsstrahlteiler gebildet wird. Dieser ist vorzugsweise so beschaffen, dass er polarisationssensitiv ist, sodass das p-polarisierte Laserlicht (erste Polarisation) transmittiert und Reflexions-Verluste und Störsignale vernachlässigbar gering sind. Vorteilhaft bei Verwendung linear polarisierten Lichts ist die Kombination mit besagter (in der Strahlungseinheit 2) vorgeschalteter λ/2 Platte 23, sodass sichergestellt werden kann, dass möglichst viel Licht an der Strahlteilereinheit 3 in den Objektarm zum Objekt O geleitet wird und Störreflexe reduziert werden.

Anschließend trifft das Licht auf die Fokussierungseinheit 4, die hier durch eine TAG-Linse 40 gebildet wird, deren Brennweite im Zuge einer Messung variiert wird (gestrichelt angedeutet). Durch die Variation der Brennweite werden die Mess-Strahlen M auf unterschiedliche Punkte im Messvolumen MV fokussiert und das Objekt O somit in seiner axialen Richtung (längs der optischen Achse der Mess-Strahlen M) abgescannt.

Hinter der TAG-Linse 40 befindet sich eine λ/4-Platte 5 als Polarisationseinheit 5, die hier um 45° zur einfallenden Polarisationsrichtung der Mess-Strahlung M gedreht ist, sodass nach Durchtritt zirkular polarisiertes Licht erzeugt wird. Die λ/4-Platte 5 kann sich auch vor der TAG-Linse befinden. Das am Objekt O reflektierte und gestreute Licht durchläuft dann wieder die λ/4-Platte 5. Dort wird das durch die Reflexion in der zirkularen Polarisationsrichtung gedrehte Licht beim erneuten Durchlauf durch die λ/4-Platte 5 s-polarisiert. Die reflektierten Mess-Strahlen M weisen damit nun die zweite Polarisation auf, die in der Polarisationseinheit 3 abgelenkt wird.

Nach erneutem Durchlaufen der TAG-Linse 40 werden die reflektierten Mess-Strahlen M an der Strahlteilereinheit 3 reflektiert und gelangen in der Figur nach oben zu einer fokussierenden Makrolinse 63 (refraktiv/diffraktiv/hybrid) in der Detektoreinheit 6. In dem hier dargestellten Fall wird das Licht mittels eines Spiegels 7 in die Detektoreinheit 6 abgelenkt. In der Brennebene dieser Makrolinse 63 befindet sich eine Lochblendenmatrix 61, wobei der Abstand der Lochblenden bevorzugt so beschaffen ist, dass das defokussierte Licht benachbarter Messpunkte nicht in die jeweiligen Lochblenden fällt. Durch eine nachfolgende Linearisierungseinheit 62, die hier Kombination aus Umlenkprismen und Mikrolinsen ist, wird das konfokal gefilterte 2D-Punktemuster der reflektierten Mess-Strahlen M auf eine 1D-Linie projiziert, wo es durch einen Liniensensor 60 (eine 1D-CCD/CMOS-Sensormatrix) detektiert werden kann. Die Linearisierungseinheit 62 kann z.B. eine Prismen- oder Beugungsgitter-Matrix (insbesondere geblazt) umfassen. Durch diese Matrix werden die in die Detektoreinheit 6 eintretenden Mess-Strahlen M umgelenkt und (insbesondere durch eine hier nicht eingezeichnete weitere refraktive/diffraktive/hybride Mikrolinsenmatrix auf den Liniensensor 60 fokussiert.

Neben der Aufzeichnung der topographischen Daten ist es für die gewisse Anwendung, beispielsweise der intraoralen Vermessung des Gebisses und von Zähnen, vorteilhaft auch den farblichen Bildeindruck zu erhalten. Dies kann mit einer zusätzlichen Farbkamera 8 realisiert werden (gestrichelt als optionales Element angedeutet). Da die Mess-Strahlen in diesem Beispiel monochromatisch sind, wird zur farbigen Aufnahme eine Weißlichtquelle W benötigt, welche eine spektrale Breitbandigkeit im visuellen Bereich von 400 nm bis 700 nm aufweist, Dabei ist es vorteilhaft, wenn zum einen der Schärfentiefebereich der Farbkamera das gesamte Messvolumen MV umfasst und zum anderen die Wellenlängen der für die Topographie verwendeten Emittermatrix 20 außerhalb des visuellen Bereichs liegen (z.B. im Nahinfrarot), sodass unter Einsatz eines dichroitischen Strahlteilers eine effiziente Nutzung beider Lichtquellen, Emittermatrix 20 für Topographie und Weißlichtquelle W für Farbbild, ermöglicht wird.

Figur 3 zeigt ein Blockschaltbild einer bevorzugten Ausführungsform des Messverfahrens zur optischen Vermessung eines Objekts O mit einer Messvorrichtung 1, z.B. nach Figur 2. Die Messvorrichtung 1 kann hier in einem medizintechnischen Messgerät 10 angeordnet sein, z.B. einem Interoralscanner, der gerade einen Zahn als Objekt O vermessen soll.

In Schritt I erfolgt eine Positionierung der Messvorrichtung 1, so dass sich das zu vermessende Objekt O in dessen Messvolumen MV befindet (s. z.B. Figur 2).

In Schritt II erfolgt eine Emission einer Vielzahl von Mess-Strahlen M aus der Strahlungseinheit 2, die hier als Lichtkegel gestrichelt angedeutet ist.

In Schritt III erfolgt eine Einstellung der Fokussierungseinheit 4 und Fokussierung der Mess-Strahlen M auf jeweils einen ersten individuellen Brennpunkt, sowie eine Verstellung der Brennweite der Fokussierungseinheit 4 innerhalb eines vorbestimmten Bereichs. Es kann in diesem Rahmen auch eine Verstellung einer lateralen Strahlablenkung der Fokussierungseinheit 4 innerhalb eines vorbestimmten Bereichs erfolgen, wobei die Brennweite der Fokussierungseinheit 4 dabei ebenfalls innerhalb eines vorbestimmten Bereichs für diskrete Werte der lateralen Strahlablenkung verstellt wird.

In Schritt IV erfolgt eine Detektion der Intensität der am Objekt O reflektierten Mess-Strahlen M mittels der Detektoreinheit 6 zumindest über den Zeitraum der Verstellung der Fokussierungseinheit 4. Dabei werden Vermessungsdaten basierend auf den detektierten Intensitäten erzeugt. Diese Vermessungsdaten stellen Punkte der Objektoberfläche in einem dreidimensionalen Raum dar.

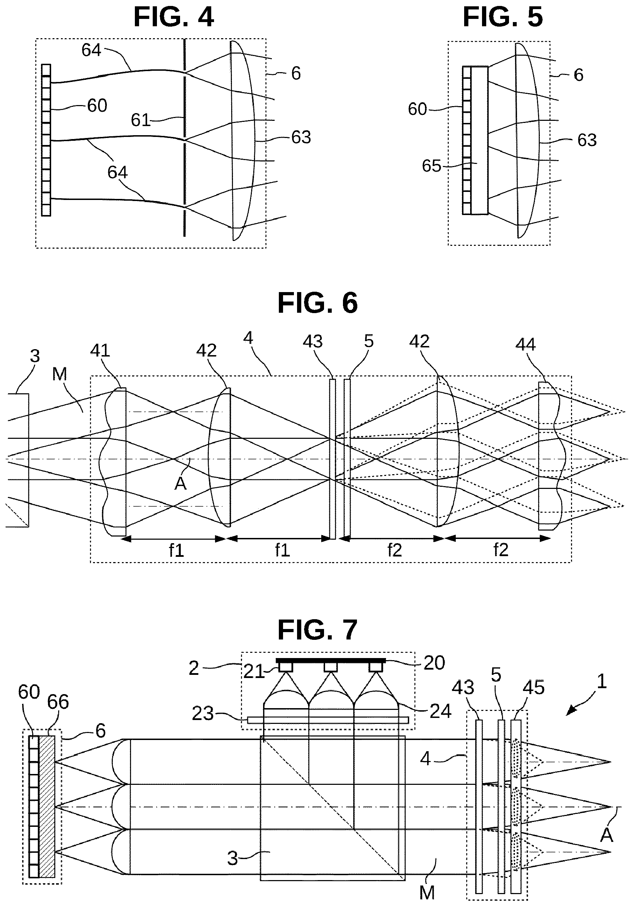

Figur 4 zeigt eine bevorzugte Detektoreinheit 6, wie sie alternativ für eine Messvorrichtung 1 nach Figur 2 verwendet werden könnte. Im Unterschied zu Figur 2 fungieren die Faserenden von Lichtleitern 64 in der Detektionseinheit 6 als Lochblenden, so dass das Licht von den Lichtleitern 64 direkt auf den jeweiligen Pixel des Liniensensors 60 geleitet werden kann. Es wird hier jedoch vorzugsweise zusätzlich eine Lochblendenmatrix 61 verwendet, damit kein unerwünschtes Streulicht auf den Liniendetektor 60 fällt. In den Löchern der Lochblendenmatrix 61 sind die Lichtleiter 64, z.B. singlemodige Fasern. positioniert, so dass das Licht von der 2D-Faseranordnung direkt auf den jeweiligen Pixel des 1D-Sensors geleitet werden kann. Um eine gute Koppeleffizienz gewährleisten zu können, sollte die numerische Apertur der Faser und die der konvergierenden Optik angepasst sein (numerische Apertur der Optik sollte ungefähr D/(2f) sein mit D: Einzelstrahldurchmesser und f: Brennweiter der Makrolinse 63).

Figur 5 zeigt eine weitere bevorzugte Detektoreinheit 6, wie sie ebenfalls alternativ für eine Messvorrichtung 1 nach Figur 2 verwendet werden könnte. Im Unterschied zu Figur 2 werden hier die reflektierten Mess-Strahlen M durch einen optischen Slicer 65 so umsortiert, dass das 2D-Messpunktemuster entlang einer geraden Linie angeordnet ist und mit dem Liniensensor 60 aufgezeichnet werden kann.

Figur 6 zeigt eine Fokussierungseinheit 4, wie sie als alternative Ausführungsform für Figur 2 verwendet werden könnte. Die einlaufenden Mess-Strahlen M entsprechen Figur 2. Es ist das Ende der Strahlteilereinheit 3 zu erkennen. Im Unterschied zu Figur 2 treffen die Mess-Strahlen M nicht auf eine TAG-Linse 40, sondern auf eine erste Freiformoptik 41 (z.B. ähnlich einer sich periodisch wiederholenden Alvarez-Lohmann Platte). Diese erste Freiformoptik 41 wird über ein fokussierendes Makrolinsen-Paar 42 (refraktiv/diffraktiv/hybrid) in einer optischen Anordnung auf die zweite Freiformoptik 44 abgebildet. Vorzugsweise in der bildseitigen Brennebene (= Fourierebene) der ersten Makrolinse 42 befindet sich ein akusto-optischer Modulator 43 (bzw. akusto-optischer Deflektor, auch als "OAM" bezeichnet), der eine Winkeländerung der transmittierten Mess-Strahlen M bewirkt. Diese Winkeländerung führt in der bildseitigen Brennebene der zweiten Makrolinse 42 zu einem Lateralversatz des abgebildeten Wellenfelds, welches der ersten Freiformoptik 41 entspricht. Dadurch ändert sich ähnlich der Lateralverschiebung bei der Alvarez-Lohmann Platte die Brennweite des resultierenden Strahls nach Interaktion mit der zweiten Freiformoptik 44.

Die Polarisationseinheit 5 in Form einer λ/4-Platte 5 ist hier in die Fokussierungseinheit 4 integriert und dient wie in Figur 2 der Änderung der Polarisation der Mess-Strahlen M. Die λ/4-Platte kann sich im Strahlenverlauf auch vor dem AOM befinden, insbesondere wenn der AOM nicht polarisationssensitiv ist. Nach Reflexion am Objekt O (hier nicht dargestellt, s. Figur 2) durchlaufen die Mess-Strahlen M auf dem Rückweg wieder die λ/4-Platte und den OAM 43, sodass das vom Objekt O kommende Licht an der Strahlteilereinheit 3 (Polarisationsstrahlteiler) abgelenkt wird und in die Detektoreinheit 6 einstrahlt.

Figur 7 zeigt eine weitere bevorzugte Ausführungsform einer Messvorrichtung 1 mit einer weiteren bevorzugten Fokussierungseinheit 4. Wie in Figur 2 werden mehrere Mess-Strahlen M von einer Emittermatrix 20 emittiert. Im Unterschied zu Figur 2 wird das divergente Strahlenbündel einer jeden Punktlichtquelle 21 durch eine refraktive/diffraktive/hybride Mikrolinsenmatrix 24 kollimiert, sodass auch die Mess-Strahlen M, deren Ursprungspunkt nicht auf der optischen Achse A liegt, parallel zur optischen Achse A verlaufen. Wie in Figur 2 verlaufen die (hier nun parallelen) Mess-Strahlen M dann durch die Strahlteilereinheit 3, die Polarisationseinheit 5 und die Fokussierungseinheit 4 mit dem Unterschied, dass hier die Strahlungseinheit 2 oben angeordnet ist und die Strahlteilereinheit 3 so ausgerichtet ist, dass die Strahlen der Strahlungseinheit 2 von der Strahlteilereinheit 3 abgelenkt und die zurückkehrenden Strahlen transmittiert werden.

In diesem Beispiel umfasst die Fokussierungseinheit 4 ein computergeneriertes Hologramm 45 (CGH). Die Mess-Strahlen M treffen in der Fokussierungseinheit 4 zunächst auf einen akusto-optischen Modulator 43, der den Winkel der Mess-Strahlen M nach Durchtritt variiert. Nach dem akusto-optischen Modulator 43 befindet sich als Polarisationseinheit 5 (hier Teil der Fokussierungseinheit 4) eine λ/4-Platte 5, die um 45° zur einfallenden Polarisationsrichtung gedreht ist, sodass nach Durchtritt zirkular polarisiertes Licht erzeugt wird. Die λ/4-Platte 5 kann sich im Strahlenverlauf auch vor dem akusto-optischer Modulator befinden. Danach trifft das Licht auf ein Volumenhologramm (ein CGH 45), welches wie ein adaptives Mikrolinsenarray wirkt und bei Änderung der Einfallsrichtung die Brennweite und somit die z-Position der Punktemuster verändert. Das am Objekt O (hier nicht dargestellt, s. Figur 2) reflektierte und gestreute Licht durchläuft dann wieder das Volumenhologramm (CGH 45), die λ/4-Platte 5 und den OAM 43, und fällt durch die Strahlteilereinheit 3 in die Detektoreinheit 6. Hier ist der Einfachheit halber lediglich ein optisches Element 66 eingezeichnet, z.B. eine Abbildungsoptik, welche das Licht über eine Mikrolinsenmatrix 9 auf den Liniensensor 6 lenkt, wobei an Stelle eines Liniensensors durchaus auch eine 2D-Sensormatrix verwendet werden könnte.

Abschließend wird angemerkt, dass die Verwendung der unbestimmten Artikel, wie z.B. "ein" oder "eine", nicht ausschließt, dass die betreffenden Merkmale auch mehrfach vorhanden sein können. So kann "ein" auch als "mindestens ein" gelesen werden. Begriffe wie "Einheit" oder "Vorrichtung" schließen nicht aus, dass die betreffenden Elemente aus mehreren zusammenwirkenden Komponenten bestehen können, die nicht unbedingt in einem gemeinsamen Gehäuse untergebracht sind, auch wenn der Fall eines umfassenden Gehäuses bevorzugt ist.

### Bezugszeichenliste

- 1: Messvorrichtung
- 2: Strahlungseinheit
- 3: Strahlteilereinheit
- 4: Fokussierungseinheit
- 5: Polarisationseinheit / λ/4-Platte
- 6: Detektoreinheit
- 7: Spiegel
- 8: Farbkamera
- 9: Mikrolinsenmatrix
- 10: Medizintechnisches Messgerät
- 20: Emittermatrix
- 21: Punktlichtquelle
- 22: Makrolinse
- 23: λ/2-Platte
- 24: Mikrolinsenmatrix
- 40: TAG-Linse
- 41: Freiformoptik
- 42: Makrolinsen-Paar
- 43: Akusto-optischer Modulator
- 44: Freiformoptik
- 45: CGH
- 60: Liniensensor
- 61: Lochblendenmatrix
- 62: Linearisierungseinheit
- 63: Makrolinse
- 64: Lichtleiter
- 65: Optischer Slicer
- A: Optische Achse
- O: Objekt
- W: Weißlichtquelle

## Patentansprüche

1. Messvorrichtung (1) zur optischen Vermessung eines Objekts (O) umfassend:
- eine Strahlungseinheit (2) ausgelegt zur Emission einer Vielzahl von räumlich getrennten, diskreten Mess-Strahlen (M),
- eine Strahlteilereinheit (3), welche dazu ausgelegt ist, einen ersten Teil der Mess-Strahlen (M) im Wesentlichen zu transmittieren und einen zweiten Teil der Mess-Strahlen (M) abzulenken,
- eine Fokussierungseinheit (4), ausgelegt zur gesteuerten, variablen Fokussierung der Mess-Strahlen (M),
- eine Detektoreinheit (6), ausgelegt zur selektiven Detektion der einzelnen reflektierten Mess-Strahlen (M),
wobei die Komponenten in der Messvorrichtung (1) so angeordnet sind, dass bei einer Messung die Strahlungseinheit (2) eine Mehrzahl von Mess-Strahlen (M) durch die Strahlteilereinheit (2) und die Fokussierungseinheit (4) auf ein vorbestimmtes Messvolumen (MV) emittiert, und die aus dem Messvolumen (MV) reflektierten Mess-Strahlen (M) durch die Strahlteilereinheit (3) zur Detektoreinheit (6) gelangen.

2. Messvorrichtung nach Anspruch 1, **dadurch gekennzeichnet, dass** die Strahlungseinheit (2) eine Matrix aus Punktlichtquellen (21), bevorzugt VCSEL, umfasst und bevorzugt ein optisches Element (22, 24) zur Formung von im Wesentlichen paralleler oder zueinander geneigter Strahlenbündel der einzelnen Strahlen der Punktlichtquellen (21) als Mess-Strahlen (M) und/oder ein Polarisationselement (23), insbesondere eine λ/2-Platte (23), zur Polarisierung der Strahlung der Punktlichtquellen (21) zur Formung polarisierter Mess-Strahlen (M).

3. Messvorrichtung nach einem der vorangehenden Ansprüche, **dadurch gekennzeichnet, dass** die Fokussierungseinheit (4) eine TAG-Linse (40) zusammen mit einer Steuerungseinheit umfasst und/oder ein computergeneriertes Hologramm (45) und/oder eine Freiformlinse (41, 44) umfasst, ausgelegt zur variablen Fokussierung von Lichtstrahlen,
- wobei die Fokussierungseinheit (4) bevorzugt eine erste Freiformlinse (41) umfasst gefolgt von einer ersten Fokussierungsoptik (42), einer Einheit, insbesondere einem akusto-optischen oder elektro-optischen Modulator (43), zur Winkeländerung der Mess-Strahlen (M), gefolgt von einer zweiten Fokussierungsoptik (42) und einer zweiten Freiformlinse (44),
oder
- wobei die Fokussierungseinheit (4) bevorzugt eine Einheit, insbesondere einen akusto-optischen Modulator (43), zur Positions- und/oder Winkeländerung der Mess-Strahlen (M) gefolgt von einem computergenerierten Hologramm (45) oder einer Freiformlinse (41, 44) umfasst.

4. Messvorrichtung nach einem der vorangehenden Ansprüche, **dadurch gekennzeichnet, dass**
- die Strahlungseinheit (2) zur Emission von polarisierten Mess-Strahlen (M) ausgelegt ist,
- die Strahlteilereinheit (3) dazu ausgelegt ist, Strahlung mit einer ersten Polarisation im Wesentlichen zu transmittieren und Strahlung mit einer zweiten Polarisation, welche sich von der ersten Polarisation unterscheidet, abzulenken, wobei die Strahlteilereinheit (3) bevorzugt einen Polarisationsstrahlteiler umfasst,
- die Messvorrichtung (1) eine Polarisationseinheit (5) umfasst, ausgelegt zur Änderung der Polarisation der Mess-Strahlen (M),
- wobei die Komponenten in der Messvorrichtung (1) so angeordnet sind, dass bei einer Messung die Strahlungseinheit (2) eine Mehrzahl von polarisierten Mess-Strahlen (M) durch die Strahlteilereinheit (2) und die Fokussierungseinheit (4) auf ein vorbestimmtes Messvolumen (MV) emittiert, die Polarisation der Mess-Strahlen (M) durch die Polarisationseinheit (5) in eine andere Polarisation geändert wird, so dass aus dem Messvolumen (MV) reflektierte Mess-Strahlen (M) durch die Strahlteilereinheit (3) zur Detektoreinheit (6) gelangen,
wobei die Komponenten der Messvorrichtung (1) bevorzugt für einen konfokalen Verlauf von Mess-Strahlen (M) und reflektierten Mess-Strahlen (M) angeordnet sind.

5. Messvorrichtung nach Anspruch 4, **dadurch gekennzeichnet, dass** die Polarisation der von der Strahlungseinheit (2) emittierten Mess-Strahlen (M) eine lineare Polarisation ist und die Polarisationseinheit (5) bevorzugt so ausgestaltet und angeordnet ist, dass sie die Polarisation der Mess-Strahlen (M) in eine andere Raumachse dreht, wobei die Polarisationseinheit (5) bevorzugt eine λ/4-Platte (5) ist, die insbesondere um 45° zur Richtung der Polarisation der Mess-Strahlen (M) gedreht ist.

6. Messvorrichtung nach einem der vorangehenden Ansprüche, **dadurch gekennzeichnet, dass** die Fokussierungseinheit (4) dazu ausgelegt ist, die Mess-Strahlen (M) lateral zur Strahlrichtung zu bewegen, insbesondere auf mäanderförmigen oder spiralförmigen Bahnen, und bevorzugt bei vorbestimmten lateralen Ablenkungen eine variable Fokussierung der Mess-Strahlen (M) über einen vorbestimmten Bereich der Fokussierung vorzunehmen.

7. Messvorrichtung nach einem der vorangehenden Ansprüche, **dadurch gekennzeichnet, dass** die Detektoreinheit (6) mindestens einen Liniendetektor (60) umfasst und eine Linearisierungseinheit (62), die dazu ausgestaltet ist, ein zweidimensionales Lichtmuster auf den Liniendetektor (60) abzubilden, bevorzugt einen mikrooptischen image slicer oder eine Anordnung von Lichtleitern (64) oder eine Transformationsoptik, wobei die Detektoreinheit (6) zur Ausblendung unerwünschter Strahlung bevorzugt eine Lochblendenmatrix (61) umfasst, bevorzugt eine Kombination von Fokussierungsoptik (63) und/oder Lichtleiter (64) und Lochblendenmatrix (61).

8. Messvorrichtung nach einem der vorangehenden Ansprüche, umfassend eine Farbbildkamera (8) zur Aufnahme von zweidimensionalen Farbbildern des Objekts (O) und insbesondere eine Weißlichtquelle (W) zur Beleuchtung des Objekts (O) mit weißem Licht für die Farbbildkamera (8), wobei die Messvorrichtung (1) bevorzugt zusätzlich eine Bildbearbeitungseinheit umfasst, die dazu ausgestaltet ist, den Vermessungsdaten des Objekts (O) Farbinformationen der aufgenommenen Farbbilder zuzuordnen.

9. Messverfahren zur optischen Vermessung eines Objekts (O) mit einer Messvorrichtung (1) nach einem der vorangehenden Ansprüche, umfassend die Schritte:
- Anordnung eines Objektes (O) im Messvolumen (MV) der Messvorrichtung (1) oder Positionierung der Messvorrichtung (1), so dass sich ein zu vermessendes Objekt (O) im Messvolumen (MV) befindet,
- Emission einer Vielzahl von Mess-Strahlen (M) aus der Strahlungseinheit (2),
- Einstellung der Fokussierungseinheit (4) und Fokussierung der Mess-Strahlen (M) auf jeweils einen ersten individuellen Brennpunkt,
- Verstellung der Brennweite der Fokussierungseinheit (4) innerhalb eines vorbestimmten Bereichs,
- optional: Verstellung einer lateralen Strahlablenkung der Fokussierungseinheit (4) oder der Mess-Strahlen (M) innerhalb eines vorbestimmten Bereichs, und Verstellung der Brennweite der Fokussierungseinheit (4) innerhalb eines vorbestimmten Bereichs für diskrete Werte der lateralen Strahlablenkung,
- Detektion der Intensität der am Objekt (O) reflektierten Mess-Strahlen (M) mittels der Detektoreinheit (6) zumindest über den Zeitraum der Verstellung der Fokussierungseinheit (4), und Generierung von Vermessungsdaten basierend auf den detektierten Intensitäten,
- optional: Wiederholung der Messung mit einer anderen relativen Positionierung von Messvorrichtung (1) und Objekt (O).

10. Medizintechnisches Messgerät (10), insbesondere ein Interoralscanner oder ein Endoskop, umfassend eine Messvorrichtung (1) nach einem der Ansprüche 1 bis 8 und bevorzugt ausgelegt zur Durchführung eines Messverfahrens nach Anspruch 9.
